# EUROPÄISCHE PATENTSCHRIFT

(11) **EP 0 464 586 B1**
(45) Veröffentlichungstag und Bekanntmachung des Hinweises auf die Patenterteilung: **14.12.1994**
(21) Anmeldenummer: 91110441.2
(22) Anmeldetag: 25.06.1991
(51) Int. Cl.: B01D 53/36

(54) **Verfahren und Vorrichtung zur katalytischen Abluftreinigung**
Process and device for catalytic waste air purification
Procédé et dispositif pour la purification catalytique d'air d'échappement

(30) Priorität: 29.06.1990 DE 4020657
(43) Veröffentlichungstag der Anmeldung: 08.01.1992
(73) Patentinhaber: LTG Lufttechnische GmbH, D-70405 Stuttgart (DE)
(72) Erfinder: Beck, Bernhard, Dipl.-Ing., W-7300 Esslingen (DE); Mokler, Bernhard, Dipl.-Ing., W-7030 Böblingen (DE)
(74) Vertreter: Gleiss, Alf-Olav, Dr.jur. Dipl.-Ing.

(56) Entgegenhaltungen:
- EP-A- 0 194 430
- EP-A- 0 226 203
- DD-A- 279 185
- DE-A- 3 505 354

## Beschreibung

Die Erfindung betrifft ein Verfahren und eine Vorrichtung zur katalytischen Abluftreinigung nach der Gattung der Ansprüche 1 und 10.

Bei dem hier angesprochenen Verfahren wird eine flammenlose Verbrennung durchgeführt, die der Reinigung des Rohgases bzw. der Abluft dient, die dabei von Lösungsmitteldämpfen, Geruchsstoffen und/oder sonstigen katalytisch verbrennbaren Substanzen befreit wird. Ein derartiges Verfahren wird vorzugsweise bei industriellen Trocknungs- und Abdunstungsprozessen eingesetzt, wobei gasförmige Kohlenwasserstoffverbindungen in Kohlendioxyd und Wasser oxydiert werden.

Die katalytische Abluftreinigung verläuft normalerweise exotherm. Dabei wird die zu reinigende Abluft bereits mit einer relativ hohen Temperatur, der Reaktionstemperatur, in den Katalysator eingeleitet. Während der katalytischen Umsetzung wird zusätzliche Energie frei, die den Katalysator und das ihn durchströmende Gas weiter erwärmt. Dabei ist darauf zu achten, daß der Katalysator nur in einem vorgegebenen Temperaturband seine Wirkung entfalten kann und bei einer Übertemperatur geschädigt wird.

Es ist aus der DE-A-35 05 354 bekannt, zur Vorwärmung der zu reinigenden Abluft regenerative Wärmetauscher zu verwenden, die mindestens zwei Wärmespeicher aufweisen. Diese werden im Wechsel mit aus dem Katalysator strömenden Reingas und mit zu reinigender Abluft beaufschlagt. Während der Durchströmung mit dem im Katalysator aufgrund des exothermen Verbrennungsvorgangs erwärmten Reingas speichert der Wärmespeicher in einem ersten Zyklus Energie, die während des nächsten Durchströmungsvorgangs, dem zweiten Zyklus, an die Abluft abgegeben wird. Auf diese Weise wird die Abluft auf die erforderliche Temperatur zur katalytischen Nachverbrennung erhitzt.

Bei bekannten Verfahren und Vorrichtungen zur katalytischen Abluftreinigung unter Einsatz von regenerativen Wärmetauschern muß, um eine thermische Schädigung oder Zerstörung des Katalysators zu vermeiden, eine Begrenzung der Schadstoffbelastung der Abluft vorgesehen werden. Beispielsweise wird bei bestehenden Anlagen die maximal zulässige Lösungsmittelkonzentration auf 2 g/m³ begrenzt, damit die Erwärmung des Katalysators aufgrund der Umsetzung der Lösungsmittel nicht zu dessen Zerstörung führt.

Jedoch ist festzustellen, daß die Einstellung der für die katalytische Nachverbrennung optimalen Temperatur sehr aufwendig und häufig ungenau ist: bei zu geringem Lösungsmittelgehalt im Rohgas ist die Temperatur im Katalysator zu niedrig, bei zu hohem Lösungsmittelgehalt zu hoch. Alles in Allem wird der Katalysator oft nicht im optimalen Wirkungsbereich betrieben.

Das bekannte Verfahren hat darüber hinaus -ebenso wie die bekannte Vorrichtung- den Nachteil, daß die Temperatureinstellung in den Wärmetauschern nicht exakt genug möglich ist. Insbesondere kann eine "Schichtung" der Temperatur innerhalb des Wärmetauschers eintreten: Auf der Seite, auf der das heiße Reingas in den Wärmetauscher einströmt ist dieser am wärmsten, auf der gegenüberliegenden Seite am kältesten. Dies führt dazu, daß bei einer Strömungsumkehr der durch den Wärmetauscher geführten Gase zunächst ein Volumenstrom mit überhöhter Temperatur aus dem wärmetauscher ausgetragen wird, der den mit diesem Gas beaufschlagten Katalysator überhitzt. Der Katalysator kann auf diese Weise beschädigt werden. Jedenfalls wird dessen Wirksamkeit bei der Reinigung des eintretenden Gases stark reduziert, weil die obere für die Reinigung des Gases einzuhaltende Temperaturgrenze überschritten wird.

Wenn man bei dem Stand der Technik eine derartige Überhitzung vermeiden will, also wenn der Einleitungsbereich des Wärmetauschers auf eine maximale für den Katalysator erträgliche Temperatur eingestellt wird, so führt dies zu einer mangelnden Erwärmung des übrigen Wärmetauscherpakets. Daher kann nur relativ wenig Abluft nach einer Gasstromumkehr aufgeheizt werden, so daß das Verfahren bzw. die Vorrichtung insgesamt wenig effektiv sind und aufgrund der häufigen Gasstromumschaltungen die Vorrichtung einem hohen Verschleiß unterliegt.

Es ist demgegenüber Aufgabe der Erfindung, ein Verfahren sowie eine Vorrichtung zu schaffen, mit denen in allen Betriebszuständen eine Überhitzung des Katalysators vermieden und damit eine optimale Reinigung von Abgasen sichergestellt wird.

Diese Aufgabe wird bei einem Verfahren gemäß Oberbegriff des Anspruchs 1 mit Hilfe der in diesem Anspruch genannten Merkmale gelöst. Die Temperatur des aus dem Katalysator strömenden Reingases, welches in einen Wärmetauscher eingeleitet wird, ist mit Hilfe des hier vorgeschlagenen Verfahrens regelbar. Dabei sind zwei verschiedene Regelverfahren möglich: Einmal kann die Temperatur des in den Wärmetauscher strömenden Gases durch Zuführung von Frischluft auf einen vorgegebenen Wert geregelt werden, zum anderen ist es möglich, zunächst eine Überhitzung des Wärmetauschers zuzulassen, beispielsweise durch die Einleitung unvermischten Reingases, und anschließend eine gezielte Abkühlung des Wärmetauschers zu bewirken, indem die Temperatur des aus dem Katalysator strömenden heißen Reingases durch erhöhte Zufuhr von Frischluft reduziert wird. Das Verfahren ist also auf jeden Fall geeignet, eine Überhitzung des Wärmetauschers zu vermeiden, insbesondere in dem Bereich, in den das Reingas eingeleitet wird. Bei einer Gasstromumkehr kann also kein überhitzter Gas-Volumenstrom aus dem Wärmetauscher in den Katalysator gelangen, so daß dessen Überhitzung sicher vermieden wird.

Die Temperatur des in den Katalysator eingeleiteten Rohgas- bzw. Abluftstroms wird also durch die gezielte Einstellung der Temperatur im Wärmespeicher vorgegeben. Dazu wird die Temperatur des Wärmespeichers während des Ladevorgangs, also während der Durchströmung mit erwärmten Reingas aus dem Katalysator, geregelt. Auf diese Weise wird sichergestellt, daß nach Umschaltung der Strömungsrichtung kein überhitztes Rohgas in den Katalysator eingeleitet wird. Daher kann eine weitere Erwärmung des Gases während der katalytischen Nachverbrennung im Katalysator hingenommen werden, ohne daß es zu dessen Zerstörung aufgrund einer Überhitzung kommt.

Bevorzugt wird ein Verfahren, bei dem die Temperaturregelung des Wärmespeichers durchgeführt wird, indem dem Reingas aus dem Katalysator Frischluft zugeführt wird. Durch die Einleitung von Frischluft wird die während des Ladevorgangs erreichbare Temperatur des Wärmespeichers begrenzt, wodurch die maximal an den zu erwärmenden Abluftgasstrom abgebbare Energie ebenfalls begrenzt wird. Nach Umschaltung der Strömungsrichtung kann die Abluft während des Durchströmens des Wärmespeichers folglich nicht überhitzt werden.

Bevorzugt wird weiterhin eine Ausführungsform des Verfahrens, bei dem dem aus dem Katalysator ohne Frischluft oder mit einem geringen Frischluftanteil kommenden Reingas während des Ladevorgangs gezielt Frischluft zugeführt wird, um die Temperatur des in den Wärmespeicher einströmenden Gases auf einen bestimmten Wert einzustellen. Dabei ist es einerseits möglich, bereits durch die Vorgabe der Temperatur des in den Wärmespeicher einströmenden Gases die maximale Temperatur des Wärmespeichers zu begrenzen. Es ist jedoch auch möglich, insbesondere um eine rasche Erwärmung des Speichers zu erreichen, stark erhitztes Reingas unmittelbar aus dem Katalysator ohne Frischluft oder mit einem geringen Frischluftanteil in den Wärmespeicher einzuleiten und zunächst eine gewisse Überhitzung hinzunehmen. Erst gegen Ende des Ladevorgangs wird dann zur Begrenzung der Temperatur des Wärmespeichers Frischluft beispielsweise unmittelbar in den Speicher eingeleitet oder dem weiterhin zugeführten Reingas zugemischt.

Das Verfahren kann auch so weitergebildet werden, daß ein Teil des aus dem Katalysator strömenden Reingases unmittelbar an die Umgebung abgegeben wird. Diese Maßnahme dient dazu, überschüssige Energie aus dem Gesamtsystem abzuleiten. Es wird dann nur soviel Reingas verwendet, wie es für die gewünschte Aufheizung des jeweiligen Wärmespeichers erforderlich ist.

Bevorzugt wird weiterhin ein Verfahren, bei dem das in den Katalysator strömende Gas gegebenenfalls mit Hilfe eines Brenners auf die Reaktionstemperatur aufgeheizt werden kann. Jedesmal, wenn die Abluftreinigung eingeleitet wird, also z.B. beim Anfahren der Reinigungsanlage, liegt die zu reinigende Abluft nicht in dem erforderlichen Temperaturbereich, so daß der Katalysator seine optimale Wirkung nicht entfalten kann. In diesem Fall kann die Abluft mittels eines Brenners erwärmt werden. Es ist auch möglich, daß die Abluft so wenig mit Lösungsmitteln belastet ist, daß der exotherme Vorgang innerhalb des Katalysators nicht genügend Energie liefert, um die nachfolgende Abluft auf die Solltemperatur zu erwärmen. Auch in diesem Fall kann der Brenner eingeschaltet werden.

Weitere Ausführungsformen des Verfahrens ergeben sich aus den übrigen Unteransprüchen.

Die genannte Aufgabe wird auch mit Hilfe einer Vorrichtung zur katalytischen Abluftreinigung gelöst, die die in Anspruch 10 genannten Merkmale aufweist. Die Vorrichtung zeichnet sich durch eine Regeleinrichtung aus, die die Temperatur des Wärmespeichers während der Beaufschlagung mit Reingas, also während des Ladevorgangs, regelt und auf einen vorbestimmten Wert einstellt. Da der Wärmespeicher nach dem Laden, also nach der Durchströmung mit Reingas, der Erwärmung der zu reinigenden Abluft dient, ist dessen Temperatur so einzustellen, daß die Abluft nach Durchströmen des Speichers auf die für die katalytische Reinigung erforderliche Temperatur gebracht ist.

Bevorzugt wird eine Vorrichtung, bei der die Regeleinrichtung diverse Temperatursensoren unter anderem im Gasstrom vor den Wärmespeichereinheiten aufweist. Diese können die Temperatur des Ladegases, also des mit Frischluft versehenen Reingases, erfassen, so daß die gewünschte Temperatur einstellbar ist.

Besonders bevorzugt wird eine Vorrichtung, die sich durch einen Bypass auszeichnet, über den aus dem Katalysator strömendes Reingas unmittelbar an die Umgebung abgegeben werden kann. Dadurch kann überschüssige Energie aus der Vorrichtung abgeleitet werden, so daß die Temperatureinstellung des restlichen in den Wärmespeicher einströmenden Reingases leichter möglich ist. Insbesondere wird die Menge der erforderlichen Frischluft, die dem Reingas zur Einstellung der gewünschten Temperatur zugeführt werden muß, vermindert. Dies wirkt sich auf die Dimensionierung des Frischluftventilators vorteilhaft aus. Überdies wird durch den Bypass die durch die Wärmespeicher strömende Gasmenge auch bei Zufuhr von Frischgas konstant gehalten, auch bleibt so der Druckverlust der Anlage gleich.

Besonders bevorzugt wird eine Vorrichtung zur katalytischen Abluftreinigung, bei der die Wärmespeicher des Wärmetauschers und der Katalysator zu einer Einheit zusammengefaßt sind. Auf diese Weise kann die im Katalysator entstehende Temperatur unmittelbar an die Wärmetauscher abgeleitet werden. Aufgrund der minimierten Wärmeverluste reduziert sich der Energiebedarf einer derartigen Vorrichtung. Überdies ist die Isolation der aus Wärmetauscher und Katalysator bestehenden Einheit wesentlich einfacher als bei einer getrennten Aufstellung dieser Elemente. Schließlich sind die Gaskanäle zur Verbindung der Wärmespeicher mit dem Katalysator besonders günstig herstellbar: Rohre, die den heißen Gasstrom leiten, sind kürzer als die Rohre auszubilden, die den kühleren Gasstrom führen. Dadurch ergeben sich günstigere Isolationsmöglichkeiten.

Weitere Vorteile der Vorrichtung ergeben sich aus den übrigen Unteransprüchen.

Die Erfindung wird im folgenden anhand der Zeichnung näher erläutert. Es zeigen:
- Figur 1: ein erstes Funktionsschema einer Vorrich tung zur katalytischen Abgasreinigung und
- Figur 2: ein zweites Funktionsschema einer Vorrichtung zur katalytischen Abgasreinigung und
- Figur 3: eine Skizze zur Verdeutlichung des Aufbaus einer Vorrichtung zur katalytischen Abgasreinigung.

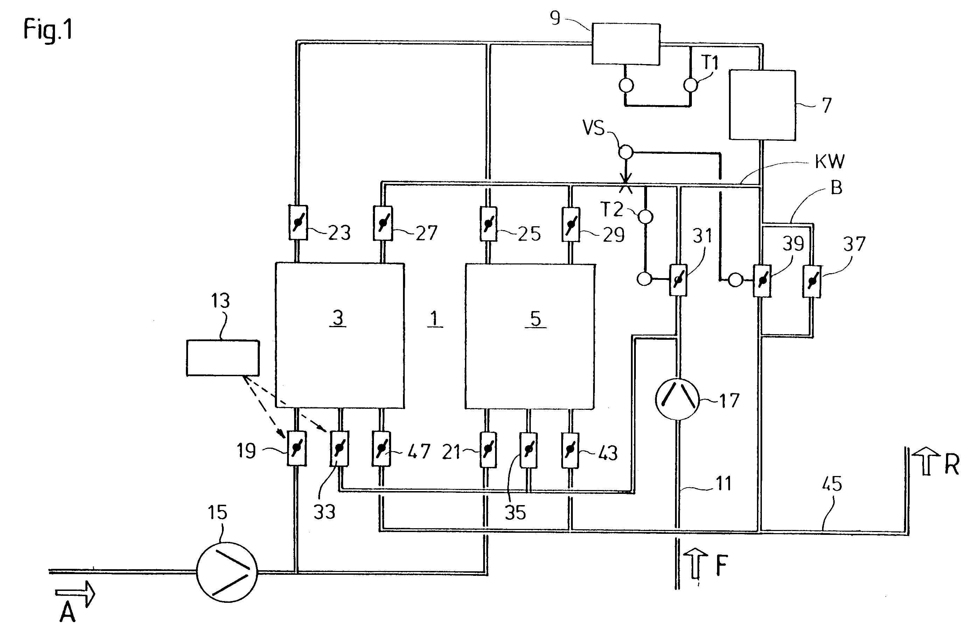

Anhand von Figur 1 sollen das Verfahren zu katalytischen Abluftreinigung bzw. die Funktion der Vorrichtung zur katalytischen Abgasreinigung erläutert werden.

Die Abluftreinigung wird bei dem dargestellten Ausführungsbeispiel mit Hilfe eines Wärmetauschers 1 durchgeführt, der zwei Wärmespeicher 3 und 5 aufweist. Grundsätzlich wären auch rekuperative Wärmetauscher einsetzbar, jedoch wird hier von regenerativen Systemen ausgegangen.

Die zu reinigende Abluft A, das Rohgas, wird einem Katalysator 7 zugeführt, wo die katalytische Nachverbrennung der in der Abluft vorhandenen Substanzen erfolgt. Allerdings muß das in den Katalysator strömende Gas auf eine vorgegebene Temperatur von beispielsweise 300°C, die Reaktionstemperatur, gebracht werden.

Die zu reinigende Abluft wird über eine hier als Brenner 9 ausgebildete Heizvorrichtung dem Katalysator zugeführt.

In das die genannten Teile verbindende Rohrsystem wird über eine geeignete Leitung 11 Frischluft F eingeleitet. Während der Abgasreinigung werden die beiden Wärmespeicher 3 und 5 abwechselnd von der zu reinigenden Abluft und von gereinigtem heißen Reingas aus dem Katalysator durchströmt. Zur Steuerung der Gasströme sind dem Kanalnetz verschiedene Klappen zugeordnet, die von einer Steuerungs- und Regeleinheit 13 gesteuert werden. Diese Einheit ist hier lediglich skizziert dargestellt. Die verschiedenden insbesondere elektrischen Leitungen zur Beeinflussung der Stellung der verschiedenen Klappen sind hier zur Verbesserung der Übersichtlichkeit nicht dargestellt.

Die Klappen beeinflussen jeweils die in und aus den Wärmespeichern fließenden Gasströme.

Zur Aufrechterhaltung der Gasströme sind hier zwei Ventilatoren vorgesehen, von denen der erste Ventilator 15 den Wärmespeichern 3 und 5 vorgeordnet ist und der zweite Ventilator 17 der Frischluftzufuhr dient.

Den in die Wärmespeicher 3 und 5 führenden Abluft-Leitungen sind hier die Klappen 19 und 21 zugeordnet. In der Leitung zwischen dem ersten Wärmespeicher 3 und dem Brenner 9 liegt die Klappe 23 und in der Leitung zwischen dem zweiten Wärmetauscher 5 und dem Brenner die Klappe 25. In der Verbindungsleitung KW zwischen dem Katalysator 7 und dem ersten Wärmespeicher 3 liegt die Klappe 27 und zwischen Katalysator 7 und dem zweiten Warmespeicher 5 die Klappe 29. In diese Verbindungsleitung KW mündet die Frischluft führende Leitung 11, wobei vor dem Eintritt dieser Leitung in die Verbindungsleitung KW eine Klappe 31 vorgesehen ist. Von der Leitung 11 für Frischluft ist überdies jeweils ein Kanal zu den Wärmespeichern 3 und 5 geführt, wobei vor dem Eintritt dieser Leitung in den ersten Wärmespeicher 3 eine Klappe 33 und vor dem Eintritt in den zweiten Wärmespeicher 5 eine Klappe 35 vorgesehen ist. Das aus dem Katalysator austretende Reingas wird über einen Bypass B mit einer Klappe 37 geführt. Parallel zu dem Bypass ist ein Leitungsabschnitt vorgesehen, der eine Klappe 39 aufweist.

Ein Temperatursensor T1 wirkt mit dem Brenner 9 zusammen, wobei der Sensor die Temperatur des in den Katalysator 7 einströmenden Gasstroms mißt.

Ein zweiter Temperatursensor T2 erfaßt die Temperatur des in die Wärmespeicher 3 und 5 einströmenden Gases, hier nach der Einmündungsstelle der Leitung 11 für Frischluft in die Verbindungsleitung KW zwischen Katalysator 7 und den Wärmespeichern 3 und 5. Der zweite Temperatursensor T2 wirkt mit der Klappe 31 zusammen. Er steht überdies -wie auch der Sensor T1- mit der Regeleinrichtung 13 in Verbindung.

Der Volumenstrom des den Wärmespeichern 3 und 5 je nach Stellung der Klappen 23, 25, 27, 29 zugeleiteten Gases wird von einem geeigneten Sensor VS erfaßt, der mit der Klappe 39 und der Regeleinheit 13 zusammenwirkt.

Der zweite Wärmespeicher 5 ist über eine Klappe 43 mit der Reingas führenden Abgabeleitung 45 verbunden, der erste Wärmespeicher 3 über eine Klappe 47.

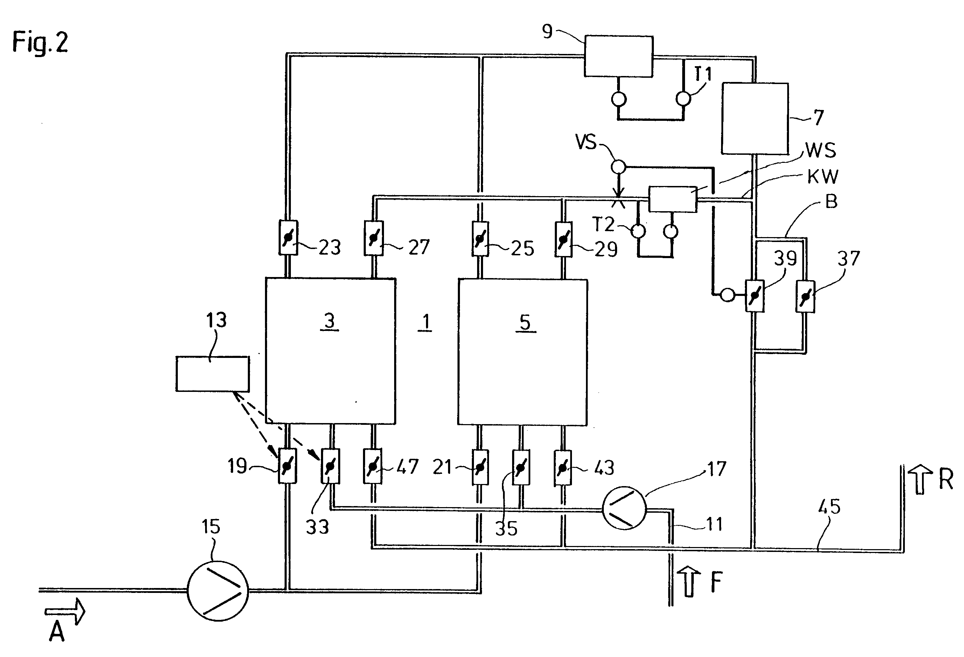

Figur 2 zeigt ein weiteres Funktionsschema, bei dem Teile, die mit denen in Figur 1 übereinstimmen, mit gleichen Bezugszeichen versehen sind. Auf deren ausführliche Beschreibung kann hier daher verzichtet werden. Aus Figur ist widerum ein Wärmetauscher 1 mit zwei Wärmespeichern 3 und 5 ersichtlich, die zyklisch mit Abluft A beaufschlagt werden. Die Abluft wird über einen Katalysator 7 geleitet und dort gereinigt. Zur Erreichung der Reaktionstemperatur, werden die Wärmespeicher mit Hilfe des aus dem Katalysator strömenden Reingases erwärmt. Durch eine Regeleinrichtung 13 wird der Gasstrom so durch die Wärmespeicher geführt, daß diese einmal durch das Reingas erhitzt und zum anderen in einem weiteren Zyklus durch das zu reinigende Rohgas abgekühlt werden. Vor der Einleitung von gereinigtem Gas werden die Wärmespeicher jeweils durch Frischluft gespült. Bei der Einleitung des Reingases aus dem Katalysator 7 wird eine Temperaturregelung vorgenommen, das heißt, das in die Wärmespeicher eingeleitete Reingas wird auf eine vorgegebene Temperatur gebracht. Hierzu ist bei dem in Figur 2 dargestellten Funktionsschema zwischen Katalysator und Wärmespeicher 3 und 5 eine Wärmesenke WS geschaltet, die dem Reingas auf beliebige Weise Wärme entziehen kann. Durch einen der Wärmesenke nachgeschalteten Temperatursensor T2 wird die Temperatur, also die dem Reingas zu entziehende Wärmemenge, eingestellt.

Statt der beiden Wärmespeichern 3 und 5 gemeinsamen Wärmesenke WS kann auch vorgesehen werden, daß die Temperatur der Wärmespeicher dadurch geregelt wird, daß diesen unmittelbar Wärme entzogen wird. Dies könnte dadurch geschehen, daß beispielsweise Wasser eingesprüht wird. Auch ist es möglich, beispielsweise durch in die Wärmespeicher integrierten Wärmesenken diesen Wärme zu entziehen, um eine vorgegebene Temperatur einzustellen. Die Ausbildung der Wärmesenken ist beliebig. Es können also bekannte Wärmetauscher eingesetzt werden.

Gegebenenfalls sind Leitungen vorzusehen, die der Wärmesenke ein kühles Medium zuführen und das erwärmte Medium ableiten. Derartige Leitungen sind aus Gründen der besseren Übersichtlichkeit hier nicht dargestellt.

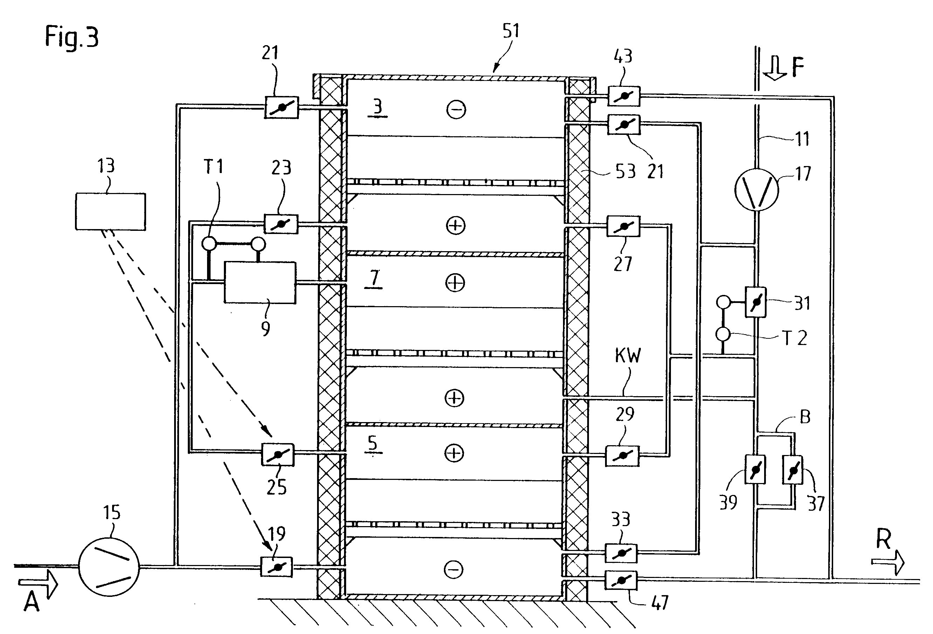

Figur 3 zeigt den konstruktiven Aufbau einer Vorrichtung zur katalytischen Abgasreinigung, wobei in Figur 1 und 2 übereinstimmende Teile mit gleichen Bezugszeichen versehen sind.

Aus der Darstellung gemäß Figur 3 ist ersichtlich, daß der erste Wärmespeicher 3 und der zweite Wärmespeicher 5 gemeinsam mit dem Katalysator 7 in ein und dasselbe Gehäuse 51 eingebracht sind und eine Einheit bilden, wobei der Katalysator 7 zwischen den Wärmespeichern 3 und 5 zu liegen kommt. Das Gehäuse 51 ist mit einer Isolationsschicht 53 umgeben.

Die in den Wärmetauscher 1, bzw. in dessen Wärmespeicher 3 und 5, sowie in den Katalysator 7 führende Leitungen und die aus diesen Teilen herausgeführten Kanäle entsprechen den in Figur 1 dargestellten. Ebenso stimmen die Bezeichnungen der einzelnen Klappen mit denen in Figur 1 überein.

Bei der Abluftreinigung mit der Vorrichtung gemäß Figur 3 wird also ein zyklisch regenerativer Wärmetauscher 1 mit zwei Wärmespeichern 3 und 5 hohen Wirkungsgrads gemeinsam mit einem Katalysator 7 verwendet.

Die Wärmespeicher können beliebig ausgebildet sein, z.B. aus einem keramischen Schüttbett oder aus einer metallischen Folie bestehen. Sie sind so ausgelegt, daß im gesamten Wärmetauscherprozeß eine Rückwärmzahl von mindestens 90 % erreicht wird. Die zu reinigende Abluft A bzw. das Rohgas sowie das Reingas R werden über ein System aus Klappen wechselweise über die Wärmespeicher 3 und 5 geleitet. Dabei wird dem zu reinigenden Rohgas bzw. der Abluft A beim Durchströmen der Wärmespeicher Energie zugeführt. Das Gas erfährt also beim Durchgang durch den Wärmespeicher eine Temperaturerhöhung, während dieser abgekühlt wird.

Dagegen werden die Wärmespeicher 3 und 5 wieder erwärmt, während das aus dem Katalysator strömende Reingas über die Leitung KW und die zugehörigen Klappen 27 und 29 in die Wärmespeicher eingeleitet wird.

Durch die zyklische Umschaltung der Strömungsrichtung der Gase werden die Wärmespeicher 3 und 5 in einem 1. Zyklus aufgeheizt, das heißt, sie nehmen Energie auf, und in einem 2. Zyklus abgekühlt, das heißt, sie geben die gespeicherte Energie an die zu reinigende Abluft ab. Dadurch wird diese auf die für die katalytische Reinigung erforderliche Temperatur gebracht.

Der Katalysator 7 muß an den jeweiligen Anwendungsfall angepaßt sein, also an die Substanzen, die aus der Abluft zu entfernen sind. Die Ausführung des Katalysators ist frei wählbar, so sind sowohl Monoliten als auch Schüttbettausführungen einsetzbar.

Bei dem hier dargestellten Ausführungsbeispiel wird der Katalysator unidirektional durchströmt, so daß nur die zur chemischen Umsetzung der Substanzen in der Abluft minimal erforderliche Katalysatormasse eingesetzt werden muß. Die unidirektionale Durchströmung ist insbesondere dann wichtig, wenn aus betriebstechnischen Gründen niedrige Raumgeschwindigkeiten, das heißt, große Katalysatormengen erforderlich sind, oder teure Katalysatormaterialien wie z.B. Wabenkatalysatoren eingesetzt werden müssen.

Im folgenden soll auf die verschiedenen Gaszyklen eingegangen werden:

Es wird davon ausgegangen, daß die zu reinigende Abluft A im 1. Zyklus von dem Ventilator 15 durch den ersten Wärmespeicher 3 des Wärmetauschers 1 gefördert wird. Dazu sind die im Eingangsbereich des ersten Wärmespeichers 3 liegende Klappe 19 sowie die in dessen Ausgangsbereich liegende Klappe 23 geöffnet, so daß der Abluftstrom von dem Ventilator 15 durch den ersten Wärmespeicher 3 zum Brenner 9 gelangt. Die im Eingangsbereich des zweiten Wärmespeichers 5 liegende Klappe 21 ist geschlossen.

Eine Reinigung der Abluft im Katalysator 7 kann nur dann erfolgen, wenn diese die erforderliche Reaktionstemperatur von beispielsweise etwa 300°C aufweist. Die Temperatur der in den Katalysator strömenden Abluft wird von dem Temperatursensor T1 erfaßt, der den Brenner 9 aktiviert, wenn die Reaktionstemperatur nicht gegeben ist. Für die Funktionsweise der Vorrichtung bzw. für das Reinigungsverfahren ist es belanglos, auf welche Weise die Abluft erwärmt wird. Es können also beliebige Heizanlagen Verwendung finden.

Nach allem wird also die Abluft im Brenner 9 auf die gewünschte Temperatur gebracht, insbesondere dann, wenn die Anlage im unterautothermen Betrieb gefahren wird, z.B. wenn der erste Wärmespeicher 3 -beispielsweise bei Beginn des Reinigungsverfahrens- noch nicht oder nicht ausreichend erwärmt ist. Die Energiezufuhr mit Hilfe des Brenners wird so lange aufrechterhalten, bis der zyklisch regenerative Wärmetauschvorgang eingeschwungen ist.

Soll die Anlage bei Inbetriebsnahme mittels des Brenners 9 aufgeheizt werden, so reicht es, in Betriebsphase nur einen Bruchteil der Gasmenge in die Wärmespeicher einzuleiten, die später im Normalbetrieb bei der Abluftreinigung gegeben ist.

Im Katalysator 7 werden die katalytisch verbrennbaren Substanzen in der Abluft einer Nachverbrennung unterworfen. Dabei tritt eine weitere Erwärmung des Katalysators ein. Diesem Phänomen wird dadurch Rechnung getragen, daß die Eingangstemperatur der Abluft so gewählt wird, daß auch bei der zusätzlichen Erwärmung der Abluft während des Reinigungsprozesses die für die ordnungsgemäße Funktion des Katalysators vorgegebene obere Grenztemperatur nicht überschritten wird. Dazu ist zu sagen, daß die optimale Funktion des Katalysators nur zwischen einer unteren und einer oberen Grenztemperatur gewährleistet ist. Bei der Einleitung der Abluft muß diese also zumindest auf die untere Grenztemperatur des Katalysators erwärmt sein.

Die gereinigte Abluft, das Reingas, verläßt den Katalysator 7 also mit einer Temperatur, die über der Temperatur liegt, die beim Einströmen in den Katalysator gegeben ist.

Die durch den Reinigungsvorgang erwärmte Luft wird über die Verbindungsleitung KW zwischen dem Katalysator 7 und dem Wärmetauscher 1 über die Klappe 29 in den zweiten Wärmespeicher 5 geleitet, dessen im Ausgangsbereich liegende Klappe 43 während dieses Funktionszyklus' geöffnet ist. Das im Katalysator 7 aufgeheizte Reingas gibt beim Durchströmen des zweiten Wärmespeichers 5 Energie an diesen ab und erwärmt die Speichermasse. Schließlich wird das Reingas R über die Abgabeleitung 45 an die Umwelt abgegeben. Das ausströmende Reingas kann auch noch einer sekundären Wärmerückgewinnung zugeführt werden.

Durch den zweiten Temperatursensor T2 wird die Temperatur des in den zweiten Wärmespeicher 5 strömenden Gases ermittelt. Gleichzeitig wird durch den Sensor VS die in den Wärmespeicher einströmende Gasmenge erfaßt. Aus diesen beiden Werten läßt sich die Temperatur und der Energieinhalt des Wärmespeichers bestimmen. Es ist hier allerdings auch möglich, unmittelbar im Speicher einen zusätzlichen Temperatursensor vorzusehen.

Sobald der zweite Wärmespeicher 5 die gewünschte Temperatur erreicht hat, wird der Gasstrom umgelenkt. Das heißt, die zu reinigende Abluft wird nunmehr durch den zweiten Wärmespeicher 5 geleitet und entzieht dabei dem zweiten Wärmespeicher Energie. Dieser wird abgekühlt, während die Abluft erwärmt wird und so auf die Reaktionstemperatur gebracht wird. Die erwärmte Abluft wird dann dem Katalysator 7 zugeführt.

Um die Strömungsumkehr zu erreichen, wird die Klappe 37 des Bypasses geöffnet. Anschließend werden die Klappen 29 und 43 geschlossen, um eine weitere Zufuhr von erhitzem Reingas in den zweiten Wärmespeicher 5 zu verhindern. Dann werden die Klappen 21 und 25 geöffnet und die Klappe 19 geschlossen, damit nunmehr von dem Ventilator 15 geförderte Abluft durch den erhitzten Wärmespeicher 5 geleitet und dem Katalysator 7 zugeführt werden kann. Durch Öffnen der Klappe 33 wird Frischluft in den ersten Wärmespeicher 3 eingeleitet, er wird "gespült". Restliches Rohgas wird durch die Frischluft verdrängt und durch die offene Klappe 23 dem Katalysator zugeleitet. Nach dem Spülvorgang werden die Klappen 33 und 23 geschlossen, ebenso die Klappe 37 im Bypass B, während die Klappen 27 und 47 geöffnet werden.

Mit Hilfe des Temperatursensors T1 wird festgestellt, daß die zu reinigende Abluft nunmehr die erforderliche Reaktionstemperatur erreicht hat. Der Brenner 9 wird nur bei Bedarf aktiviert.

Das von den katalytisch verbrennbaren Substanzen befreite Rohgas, das Reingas, strömt aus dem Katalysator 7 über die Verbindungsleitung KW und Klappe 27 in den ersten Wärmespeicher 3, der seinerseits nunmehr erwärmt wird. Das Reingas strömt über die Klappe 47 aus dem ersten Wärmespeicher 3 in die Abgabeleitung 45.

Wiederum dient der Temperatursensor T2 dazu, die Temperatur des in den Wärmespeicher 3 strömenden Gases zu ermitteln, damit der Ladeversorgung vorzugsweise mit einer konstanten Temperatur erfolgen kann.

Wenn der Speicher den vorgegebenen Temperaturwert erreicht hat, findet widerum eine Umschaltung des Gasstromes statt. Während dieses Zyklus' wurde der zuvor erwärmte zweite Wärmespeicher 5 durch den Zustrom der Abluft A abgekühlt, während der erste Wärmespeicher 3 durch das heiße Reingas erwärmt wurde.

Da die Abluft bei Eintritt in den Katalysator wenigstens die untere Grenztemperatur erreicht haben muß, können die Wärmespeicher nicht beliebig weit abgekühlt werden. Ansonsten müßte am Ende jedes Zyklusses der Brenner 9 für die Erwärmung der Abluft in Betrieb gesetzt werden.

Durch den exothermen Vorgang der katalytischen Verbrennung im Katalysator 7 wird schließlich eine derartige Erwärmung der Wärmespeicher erreicht, daß es zu einer Überhitzung der Abluft käme. Das heißt, durch die zu warme Abluft würde der Katalysator die obere Grenztemperatur überschreiten.

Um eine zu starke Erwärmung der Wärmespeicher zu verhindern, wird dem in der Leitung KW strömenden Reingas während des Ladevorgangs Frischluft zugeführt. Wenn mittels des Temperatursensors T2 eine zu starke Erwärmung des Reingases festgestellt wird, so wird die Klappe 31 geöffnet und über den Ventilator 17 über die Leitung 11 Frischluft in Leitung KW eingebracht. Die Temperatur des in den Wärmespeicher einströmenden Gases und damit die des zu ladenden Wärmespeichers selbst kann somit auf einen gewünschten Wert eingestellt werden, der so gewählt wird, daß insbesondere nach dem Umschalten des Gasstromes eine Überhitzung der aufzuwärmenden Abluft während der Durchströmung des Speichers vermieden wird.

Zur Temperaturregelung wird gegebenenfalls die Klappe 31 geöffnet, um das Reingas aus dem Katalysator 7 mit kühler Frischluft zu mischen. Über den Sensor VS wird dabei der in den Wärmespeicher eingeleitete Gasvolumenstrom durch Öffnen der Klappe 39 geregelt, die bei Bedarf Reingas aus dem Katalysator unmittelbar der Abgabeleitung 45 zuführt. Dieses Reingas wird dann also am Wärmespeicher vorbeigeleitet.

Die Signale der Temperatursensoren T1 und T2 werden der Regeleinrichtung 13 zugeführt, die auch der Steuerung der verschiedenen Klappen dient. Mittels der Regeleinrichtung kann also die Temperatur des Reingases während des Ladevorgangs der Wärmespeicher so eingestellt werden, daß deren Überhitzung vermieden wird. Dadurch wird sichergestellt, daß die Abluft während des Durchströmens dieser Speicher nicht über einen gegebenen Grenzwert erhitzt wird. Somit ist gewährleistet, daß der Katalysator 7 keinen thermischen Schaden erleidet. Die Regelung kann auch so ausgelegt werden, daß zunächst eine Überhitzung der Wärmespeicher zugelassen wird. Diese erwärmen sich daraufhin besonders schnell. Am Ende der Erwärmungsphase wird dann durch vermehrte Zufuhr von Frischluft sichergestellt, daß die Wärmespeicher auf die gewünschte Temperatur gebracht werden.

Die Regeleinrichtung 13 kann so eingestellt sein, daß jeweils ein fester Anteil des Reingases -zumindest nach Erreichen der Betriebstemperatur der gesamten Anlage- über den Bypass B durch Öffnen der Klappe 37 unmittelbar an die Umgebung abgeführt wird. Dadurch wird jeweils ein fester Energieanteil aus dem System entfernt und eine Überhitzung der Speicher bzw. des Katalysators vermieden. Die Klappe 37 ist stets geöffnet, während die Stellung der Klappen 19 bis 35 sowie 43 und 47 bei der Umschaltung des Gasstroms verändert wird.

Es ist jedoch auch möglich, daß im Zuge der Temperaturregelung während des Ladevorgangs eines Speichers bei Erreichen eines bestimmten Temperaturgrenzwerts die zusätzliche Klappe 39 zu öffnen, um weiteres Reingas aus dem System abzuleiten und eine Überhitzung der Speicher zu vermeiden. Auf diese Weise kann die erforderliche Frischluftmenge, die zur Temperaturregelung eingeleitet werden muß, begrenzt werden.

Für die Temperaturregelung während des Ladevorgangs des jeweiligen Wärmespeichers ist es nach allem belanglos, ob die Temperatur des einströmenden Reingases durch Zufügung von Frischluft auf einem vorgegebenen Wert geregelt wird, oder ob zunächst eine Überhitzung des Wärmespeichers ermöglicht wird, um eine rasche Aufheizung zu gewährleisten, und ob dann anschließend durch die erhöhte Frischluftzuführ in den aufzuladenden Wärmespeicher eine Abkühlung erreicht bzw. gegebenenfalls durch die Öffnung der Bypassklappen 37 bzw. 39 vermehrt Energie an die Umwelt abgegeben wird. Auch ist es -wie gesagtmöglich, Temperaturfühler unmittelbar im Wärmespeicher vorzusehen und mit deren Hilfe die Temperatur der Speicher einzuregeln.

An dem Grundprinzip der Temperaturrgelung ändert sich nichts, wenn anstelle der Frischlufteinleitung die in Figur 2 dargestellte Wärmesenke WS aktiviert wird und dem aus dem Katalysator in die Wärmespeicher strömenden Reingas Energie entzogen wird.

Grundsätzlich ist auch eine Kombination der beiden Funktionsweisen möglich: Beispielsweise können die Wärmespeicher dadurch rasch aufgeheizt werden, daß dem Reingasstrom mittels einer Wärmesenke WS nur wenig Energie entzogen wird. Anschließend wird Frischluft in die Wärmespeicher eingeleitet, um deren Solltemperatur einzustellen.

Es ist nun möglich, daß die Abluft sehr wenige katalytische brennbare Substanzen enthält. Das heißt, bei der exothermen Reaktion im Katalysator 7 wird nur wenig Energie frei. Es kann sein, daß dabei die Wärmespeicher nicht mehr ausreichend erwärmt werden können und somit die dem Katalysator zugeführte Abluft nicht die erforderliche Reaktionstemperatur erreicht. Auch in diesem Fall -also nicht nur während der Anlaufphase der Vorrichtung- kann der Brenner 9 zugeschaltet werden, um die Solltemperatur der Abluft zu gewährleisten.

Um zu verhindern, daß Reingas durch nach Umschaltung der Strömungsrichtung in den Wärmespeichern verbliebene Abluft verunreinigt wird und derartige Verunreinigungen in die Umwelt gelangen, werden die Klappen beispielsweise mit Hilfe der Regeleinrichtung 13 so gesteuert, daß die Wärmespeicher 3 bzw. 5 vor Einleitung des Reingases mit Frischluft gespült werden. Dazu werden kurzzeitig die Klappen 33 bzw. 35 und 23 bzw. 25 geöffnet, um die restliche Abluft in den Wärmespeichern durch Frischluft zu verdrängen. Währenddessen wird die Klappe 37 geöffnet und das Reingas aus dem Katalysator unmittelbar an die Umgebung abgegeben.

Bei dem dargestellten Ausführungsbeipiel ist der als Hauptventilator dienende Ventilator 15 im Rohgas- bzw. Abluftkanal vor den Wärmetauschereinheiten 3 und 5 angeordnet. Bei dieser Anordnung müssen die Klappen zum Umsteuern der Gasströme zwischen den Wärmetauschern absolut dicht sein, damit keine Abluft in das gereinigte Reingas gepresst wird. Allerdings kann der Ventilator bei konstanter Ablufttemperatur mit gleichbleibender Drehzahl bzw. konstantem Durchsatz betrieben werden. Damit ist der Bedarf an Antriebsenergie am günstigsten.

Es ist auch möglich den Ventilator 15 in der Abluftleitung vor dem Brenner 9 anzuordnen. Dabei wächst allerdings der Antriebsenergiebedarf aufgrund der höheren Gastemperatur. Diese ändert sich während eines Strömungszyklus': Bei Beginn einer Umschaltung wird die höchste Ablufttemperatur erreicht; am Ende einer Umschaltungsphase die niedrigste. Aus diesem Grund ist eine Drehzahl- bzw. Durchsatzregelung des Ventilators erforderlich. Allerdings ist bei dieser Ventilatoranordnung eine geringe Leckrate an den Klappen zulässig.

Es ist auch möglich, den Ventilator in der Abluftleitung zwischen Brenner 9 und Katalysator 7 anzuordnen. In diesem Bereich hat die Abluft die höchste Temperatur, so daß auch der höchste Antriebsenergiebedarf gegeben ist. Aufgrund der konstanten Gastemperatur kann aber die Drehzahl bzw. der Durchsatz des Ventilators konstant gehalten werden. Auch bei dieser Anordnung ist eine geringe Leckrate der Klappen zulässig.

Schließlich ist es auch möglich, den Ventilator im Reingaskanal hinter der gesamten Anlage anzuordnen. Auch hier muß eine Drehzahl- bzw. Durchsatzregelung für den Ventilator vorgesehen werden. Dieser kann jedoch bei dieser Anordnung zusätzlich auch die Förderung von Frischluft übernehmen. Allerdings bedarf es einer höheren Dimensionierung des Ventilators. Auch bei dieser Anordnung müssen die Klappen dicht ausgelegt werden.

Bei der Anordnung des Ventilators vor und nach dem Brenner 7 kann die hier beschriebene Vorrichtung vor allem für Kleinanlagen verwendet werden, bei denen die Volumenströme vergleichsweise gering sind, so daß hier mit einfacheren Klappen erheblich Bauaufwand eingespart werden kann, der auch nicht dadurch wieder aufgezehrt wird, daß ein leistungsfähigerer Ventilator eingesetzt werden muß.

Die in den Figuren dargestellte Anordnung des Ventilators wird bevorzugt in größeren Anlagen verwendet, weil hier am wenigsten Antriebsenergie erforderlich ist.

Der Frischluftventilator 17 muß so ausgelegt werden, daß er die während eines Zyklus' erforderliche volumenvariable Frischluftmenge zu liefern vermag. Während der Umschaltphase muß der Spülluftvolumenstrom sichergestellt sein, um restliche Abluft aus den Wärmespeichern zu verdrängen.

Bei dem Ausführungsbeispiel gemäß Figur 3 wurden für die Wärmespeicher 3 und 5 sowie für den Katalysator 7 Schüttbettausführungen gewählt. Die Anordnung der Schüttschichten ist dabei so gewählt, daß jeweils Bereiche hoher Temperaturen, die in der Figur "+" angeordnet sind, einander benachbart sind. Bereiche niedriger Temperatur, die mit "-" gekennzeichnet sind, liegen jeweils an den äußeren Enden der gesamten Einheit also am oberen und unteren Ende des Gehäuses 51. Damit werden Wärmeverluste an die Umgebung minimiert. Die Isolation des Gehäuses 51 kann relativ einfach durchgeführt werden, wobei eine durchgehende Isolierung 53 vorgesehen ist. In den Grenzbereichen zwischen den Wärmespeichern und dem Katalysator ist keine Isolation erforderlich.

Aufgrund der hier gewählten Anordnung sind auch die Leitungslängen optimiert: Leitungen hoher Temperatur sind sehr kurz. Nur Leitungen, die Gasströme mit niedrigerer Temperatur führen, erstrecken sich über größere Distanzen.

Das hier beschriebene Verfahren bzw. die dargestellte Vorrichtung können aufgrund der hohen Rückwärmzahl der Wärmespeicher 3 und 5 bereits ab einer Lösungsmittelkonzentration von 1,2 g/m³ im Rohgas bzw. in der Abluft autotherm betrieben werden. Dabei wird von einem spezifischen Energiegehalt des Lösungsmittels von 36 · 10⁶ J/kg ausgegangen.

Mit Hilfe der hier beschriebenen Temperaturregelung kann die Vorrichtung sowohl unter- als auch überautotherm betrieben werden. Im unterautothermen Betrieb liefert der Brenner 9 zusätzliche Energie, um die zu reinigende Abluft auf die für den Katalysator 7 erforderliche Solltemperatur zu bringen. Im überautothermen Betrieb wird die überschüssige Energie über den Bypass B ungenutzt an die Umgebung abgeleitet, um Energie aus dem System abzuführen.

Aufgrund der Temperaturregelung kann Abluft mit einer Lösungsmittelkonzentration von beispielsweise etwa 5 g/m³ gereinigt werden, ohne daß es zu einer thermischen Schädigung des Katalysators 7 kommt.

## Patentansprüche

1. Verfahren zur katalytischen Abluftreinigung mit folgenden Schritten:
- die zu reinigende Abluft wird über einen ersten Wärmespeicher eines Wärmetauschers geleitet und durch einen für die katalytische Verbrennung der in der Abluft enthaltenen Schadstoffe geeigneten Katalysator geführt;
- das heiße aus dem Katalysator strömende gereinigte Gas (Reingas) wird durch einen zweiten Wärmespeicher des Wärmetauschers geleitet und dann an die Umgebung abgegeben;
- durch Umschaltung des Luftstroms wird die zu reinigende Abluft dann durch den erwärmten zweiten Wärmespeicher und anschließend durch den Katalysator geleitet;
- das erwärmte aus dem Katalysator strömende Reingas wird durch den ersten Wärmespeicher geführt und dann an die Umgebung abgegeben;
**dadurch gekennzeichnet**, daß die Temperatur des in die Wärmespeicher strömenden Reingases durch Wärmeentzug geregelt wird, so daß sie auf einen vorbestimmten Wert eingestellt wird.

2. Verfahren nach Anspruch 1, **dadurch gekennzeichnet**, daß die Temperatur geregelt wird, indem dem in den Wärmespeicher strömenden Reingas Frischluft zugemischt wird.

3. Verfahren nach Anspruch 2, **dadurch gekennzeichnet**, daß der Wärmespeicher bis zum Erreichen eines vorgegebenen ersten Temperaturwerts mit Reingas aus dem Katalysator und anschließend bis zum Erreichen eines vorgegebenen zweiten Temperaturwerts mit Frischluft oder einem Reingas/Frischluft Gemisch beaufschlagt wird.

4. Verfahren nach einem der Ansprüche 1 bis 3, **dadurch gekennzeichnet**, daß ein Teil des aus dem Katalysator strömenden Reingases unmittelbar an die Umgebung abgegeben wird.

5. Verfahren nach Anspruch 1, **dadurch gekennzeichnet**, daß dem in den Wärmespeicher eingeleiteten Reingasstrom Wärme entzogen wird.

6. Verfahren nach einem der Ansprüche 1 bis 5, **dadurch gekennzeichnet**, daß die Wärmespeicher vor Einleitung des Reingases mit Frischluft gespült werden.

7. Verfahren nach einem der Ansprüche 1 bis 6, **dadurch gekennzeichnet**, daß der Abluftstrom vor Einleitung in den Katalysator im unterautothermen Betrieb mit Hilfe einer zusätzlichen Wärmequelle (Brenner) auf Solltemperatur gebracht wird.

8. Verfahren nach einem der Ansprüche 1 bis 6, **dadurch gekennzeichnet**, daß der Gasstrom von mindestens einem Ventilator aufrechterhalten wird, der im Abluftstrom vor den Wärmespeichern, im Abluftstrom zwischen den Wärmespeichern und dem Katalysator und/oder hinter dem Katalysator angeordnet ist.

9. Verfahren nach Anspruch 7, **dadurch gekennzeichnet**, daß der Gasstrom von mindestens einem Ventilator aufrechterhalten wird, der vor oder nach dem Brenner angeordnet ist.

10. Vorrichtung zur katalytischen Abluftreinigung nach einem Verfahren gemäß einem der Ansprüche 1 bis 9, mit
- einem mindestens zwei Wärmespeicher (3,5) aufweisenden Wärmetauscher (1);
- einem dem Wärmetauscher (1) zugeordneten und mit diesem über Luftkanäle verbundenden Katalysator (7);
- mehreren den Abluft- bzw. Reingasstrom steuernden Klappen, (19,21,23,25,27,29,)
- einer die Temperatur der Wärmespeicher einstellenden Regeleinrichtung (13),
- **gekennzeichnet durch** eine Regeleinrichtung (13) mit im Abluftstrom vor dem Katalysator (7) und im Reingasstrom vor den Wärmespeichereinheiten und/oder in den Wärmespeichereinheiten zugeordneten Temperatursensoren, mit deren Hilfe die Temperatur des aus dem Katalysator (7) in die Wärmespeicher (3,5) strömenden Reingases durch Wärmeentzug auf einen vorbestimmten Wert einstellbar ist.

11. Vorrichtung nach Anspruch 10, **gekennzeichnet durch** eine in die Katalysator und Wärmespeicher verbindende Reingasleitung mündende, mit einer Klappe (31) versehene Frischluftleitung, wobei die Stellung dieser Klappe von der Regeleinrichtung (13) regelbar ist, so daß dem Reingas aus dem Katalysator (7) Frischluft zuführbar ist.

12. Vorrichtung nach einem der Ansprüche 10 bis 11, **gekennzeichnet durch** einen von der Regeleinrichtung (13) einstellbaren Bypass, über den aus dem Katalysator (7) strömendes Reingas unmittelbar an die Umgebung abführbar ist.

13. Vorrichtung nach einem der Ansprüche 10 bis 12, **gekennzeichnet durch** den Wärmespeichern (3, 5) zugeordnete Klappen (33, 35), über die vor der Einleitung von Reingas den Wärmespeichern Frischluft zuführbar ist.

14. Vorrichtung nach Anspruch 10, **gekennzeichnet dadurch**, eine dem in den Wärmetauscher (1) eingeleiteten Reingasstrom Wärme entziehende Wärmesenke (ws).

15. Vorrichtung nach einem der Ansprüche 10 bis 13, **gekennzeichnet durch** einen vor dem Katalysator angeordneten als zusätzliche Wärmequelle dienenden Brenner (9), der im unterautothermen Betriebszustand die in den Katalysator (7)strömende Abluft (A) auf die erforderliche Reaktionstemperatur aufheizt.

16. Vorrichtung nach einem der Ansprüche 10 bis 14, **gekennzeichnet durch** mindestens einen Ventilator (15) zur Aufrechterhaltung des Gasstroms, der im Abluftstrom vor den Wärmespeichereinheiten, im Abluftstrom zwischen Wärmetauscher und Katalysator und/oder hinter dem Katalysator angeordnet ist.

17. Vorrichtung nach Anspruch 15, **gekennzeichnet durch** mindestens einen Ventilator zur Aufrechterhaltung des Gasstroms der vor oder nach dem Brenner angeordnet ist.

18. Vorrichtung nach einem der Ansprüche 10 bis 17, **dadurch gekennzeichnet**, daß die Warmespeicher (3, 5) des Wärmetauschers (1) und der Katalysator (7) zu einer Einheit (51) zusammengefaßt sind.

19. Vorrichtung nach Anspruch 18, **dadurch gekennzeichnet**, daß der Katalysator (7) zwischen den Wärmespeichern (3, 5) angeordnet ist.

20. Vorrichtung nach Anspruch 18 oder 19, **gekennzeichnet** durch zwischen den Wärmespeichern und dem Katalysator angeordnete Zwischenwände, die die Gasströme durch die Wärmespeicher bzw. den Katalysator voneinander trennen.

21. Vorrichtung nach einem der Ansprüche 10 bis 20, **gekennzeichnet durch** einen der Frischluftzufuhr dienenden Ventilator (17).

## Claims

1. A process for the catalytic cleaning of exhaust air, having the following steps:
- the exhaust air to be cleaned is passed through a first heat store of a heat exchanger and guided through a catalytic converter which is suitable for the catalytic combustion of the pollutants contained in the exhaust air;
- the hot cleaned gas (clean gas) flowing out of the catalytic converter is passed through a second heat store of the heat exchanger and then released to the atmosphere;
- by switching over the air flow, the exhaust air to be cleaned is then passed through the heated second heat store and then through the catalytic converter;
- the heated clean gas flowing out of the catalytic converter is guided through the first heat store and then released to the atmosphere;
characterized in that the temperature of the clean gas flowing into the heat store is regulated by heat removal, so that it is set to a predetermined value.

2. A process according to Claim 1, characterized in that the temperature is regulated by admixing fresh air to the clean gas flowing into the heat store.

3. A process according to claim 2, characterized in that the heat store is acted upon by clean gas from the catalytic converter until it reaches a predetermined first temperature value and is then acted upon by fresh air or a mixture of clean gas and fresh air until it reaches a predetermined second temperature value.

4. A process according to one of Claims 1 to 3, characterized in that some of the clean gas flowing out of the catalytic converter is released directly to the atmosphere.

5. A process according to Claim 1, characterized in that heat is removed from the clean gas flow introduced into the heat store.

6. A process according to one of Claims 1 to 5, characterized in that the heat stores are flushed with fresh air before the clean gas is introduced.

7. A process according to one of Claims 1 to 6, characterized in that before it is introduced into the catalytic converter in sub-autothermic operation the exhaust air flow is brought to a set temperature with the aid of an additional heat source (burner).

8. A process according to one of Claims 1 to 6, characterized in that the gas flow is maintained by at least one fan which is arranged in the exhaust air flow upstream of the heat stores, in the exhaust air flow between the heat stores and the catalytic converter and/or downstream of the catalytic converter.

9. A process according to Claim 7, characterized in that the gas flow is maintained by at least one fan which in arranged upstream or downstream of the burner.

10. A device for the catalytic cleaning of exhaust air, according to a process in accordance with one of Claims 1 to 9, having
- a heat exchanger (1) having at least two heat stores (3, 5);
- a catalytic converter (7) which is associated with the heat exchanger (1) and which is connected thereto by way of air channels;
- a plurality of butterfly valves (19, 21, 23, 25, 27, 29) controlling the exhaust air or clean gas flow,
- a regulating means (13) which adjusts the temperature of the heat stores,
- characterized by a regulating means (13) having associated temperature sensors in the exhaust air flow upstream of the catalytic converter (7) and in the clean gas flow upstream of the heat store units and/or in the heat store units, with the aid of which temperature sensors the temperature of the clean gas flowing out of the catalytic converter (7) into the heat stores (3, 5) can be adjusted to a predetermined value by heat removal.

11. A device according to Claim 10, characterized by a fresh air line which opens into the clean gas line connecting catalytic converter and heat store and which is provided with a butterfly valve (31), wherein the position of this butterfly valve can be regulated by the regulating means (13), so that fresh air can be supplied to the clean gas from the catalytic converter (7).

12. A device according to one of Claims 10 to 11, characterized by a bypass which can be adjusted by the regulating means (13) and by way of which clean gas flowing out of the catalytic converter (7) can be discharged directly to the atmosphere.

13. A device according to one of Claims 10 to 12, characterized by butterfly valves (33, 35) which are associated with the heat stores (3, 5) and by way of which the fresh air can be supplied to the heat stores before the introduction of clean gas.

14. A device according to Claim 10, characterized by a heat sink (ws) which removes heat from the clean gas flow which is introduced into the heat exchanger (1).

15. A device according to one of Claims 10 to 13, characterized by a burner (9) which is arranged upstream of the catalytic converter and which serves as an additional heat source and which in the sub-autothermic operating state heats up the exhaust air (A) flowing into the catalytic convertor (7) to the required reaction temperature.

16. A device according to one of Claims 10 to 14, characterized by at least one fan (15) for maintaining the gas flow, which fan is arranged in the exhaust air flow upstream of the heat store units, in the exhaust air flow between heat exchanger and catalytic converter and/or downstream of the catalytic converter.

17. A device according to Claim 15, characterized by at least one fan for maintaining the gas flow, which is arranged upstream or downstream of the burner.

18. A device according to one of Claims 10 to 17, characterized in that the heat stores (3, 5) of the heat exchanger (1) and the catalytic converter (7) are combined into a unit (51).

19. A device according to Claim 18, characterized in that the catalytic converter (7) is arranged between the heat stores (3, 5).

20. A device according to Claim 18 or 19, characterized by intermediate walls which are arranged between the heat stores and the catalytic converter and which separate the gas flows through the heat stores or the catalytic converter from one another.

21. A device according to one of Claims 10 to 20, characterized by a fan (17) which serves to supply fresh air.

## Revendications

1. Procédé pour la purification catalytique d'air d'échappement, se déroulant selon les étapes suivantes:
- on dirige l'air d'échappement à purifier sur un premier accumulateur de chaleur d'un échangeur de chaleur, et on le fait passer à travers un catalyseur approprié pour la combustion catalytique des éléments polluants contenus dans l'air d'échappement ;
- on dirige le gaz purifié brûlant s'écoulant à partir du catalyseur (gaz propre) à travers un deuxième accumulateur de chaleur de l'échangeur de chaleur, et on l'envoie ensuite dans l'atmosphère environnante ;
- en inversant le flux d'air on dirige alors l'air d'échappement à purifier à travers le deuxième accumulateur de chaleur réchauffé et ensuite à travers le catalyseur ;
- on fait passer le gaz propre s'écoulant du catalyseur à travers le premier accumulateur de chaleur, puis on l'envoie ensuite dans l'atmosphère environnante ;
procédé caractérisé en ce que la température du gaz propre s'écoulant dans l'accumulateur de chaleur est réglée par extraction de chaleur, de telle sorte qu'elle s'établisse à une valeur prédéterminée.

2. Procédé selon la revendication 1, caractérisé en ce qu'on règle la température en mélangeant de l'air frais avec le gaz propre s'écoulant dans l'accumulateur de chaleur.

3. Procédé selon la revendication 2, caractérisé en ce que l'accumulateur de chaleur est balayé, jusqu'à ce qu'il atteigne une première valeur de température prédéfinie, par du gaz propre provenant du catalyseur, et ensuite, jusqu'à ce qu'il atteigne une deuxième valeur prédéfinie de température, par de l'air frais ou un mélange de gaz propre et d'air frais.

4. Procédé selon l'une des revendications 1 à 3, caractérisé en ce qu'une partie du gaz propre s'écoulant à partir du catalyseur est envoyée directement dans l'atmosphère environnante.

5. Procédé selon la revendication 1, caractérisé en ce qu'on extrait de la chaleur du courant de gaz propre introduit dans l'accumulateur de chaleur.

6. Procédé selon l'une des revendications 1 à 5, caractérisé en ce qu'on rince l'accumulateur de chaleur avec de l'air frais avant l'introduction du gaz propre.

7. Procédé selon l'une des revendications 1 à 6, caractérisé en ce que le flux d'air d'échappement est mis à une température de consigne avant d'être introduit dans le catalyseur en fonctionnement sous-autothermique, à l'aide d'une source de chaleur additionnelle (brûleur).

8. Procédé selon l'une des revendications 1 à 6, caractérisé en ce que le flux de gaz est maintenu par au moins un ventilateur qui est disposé dans le flux d'air d'échappement avant les accumulateurs de chaleur, dans le flux d'air d'échappement entre les accumulateurs de chaleur et le catalyseur, et/ou derrière le catalyseur.

9. Procédé selon la revendication 7, caractérisé en ce que le flux de gaz est maintenu par au moins un ventilateur disposé avant ou après le brûleur.

10. Dispositif pour la purification catalytique d'air d'échappement par le procédé selon l'une des revendications 1 à 9 avec :
- un échangeur de chaleur (1) présentant au moins deux accumulateurs de chaleur ;
- un catalyseur (7) associé à l'échangeur de chaleur (1) et relié à celui-ci par des canaux d'air ;
- plusieurs clapets commandant l'air d'échappement ou le flux de gaz propre (19, 21, 23, 25, 27, 29) ;
- un système de régulation (13) réglant la température de l'accumulateur de chaleur ;
caractérisé par des détecteurs de température placés dans l'air d'échappement avant le catalyseur (7) et dans le gaz propre avant les unités d'accumulateurs de chaleur et/ou dans les unités d'accumulateur de chaleur, détecteurs à l'aide desquels on peut fixer la température du gaz propre s'écoulant du catalyseur (7) vers l'accumulateur de chaleur (3, 5), par extraction de chaleur à une valeur prédéterminée.

11. Dispositif selon la revendication 10, caractérisé par une conduite d'air frais débouchant dans la conduite de gaz propre reliant le catalyseur à l'accumulateur de chaleur, et pourvue d'un clapet (31), la position de ce clapet pouvant être réglée par le dispositif de réglage (13) de telle sorte que de l'air frais puisse être amené au gaz propre à partir du catalyseur (7).

12. Dispositif selon l'une des revendications 10 et 11, caractérisé par une dérivation qui peut être réglée par le dispositif de réglage (13), dérivation au moyen de laquelle on peut faire sortir du gaz propre s'écoulant du catalyseur (7) directement dans l'atmosphère environnante.

13. Dispositif selon l'une des revendications 10 à 12, caractérisé par des clapets (33, 35) correspondant aux accumulateurs de chaleur (3, 5), au moyen desquels on peut amener de l'air frais aux accumulateurs de chaleur avant l'introduction de gaz propre.

14. Dispositif selon la revendication 10, caractérisé par un dissipateur thermique (ws) extrayant de la chaleur du flux de gaz propre introduit dans l'échangeur de chaleur (1).

15. Dispositif selon l'une des revendications 10 à 13, caractérisé par un brûleur (9) disposé avant le catalyseur et servant de source de chaleur additionnelle qui réchauffe l'air d'échappement (A) s'écoulant dans le catalyseur (7), à la température nécessaire de réaction quand on est en état de fonctionnement sous-autothermique.

16. Dispositif selon l'une des revendications 10 à 14, caractérisé par au moins un ventilateur (15) servant à maintenir le flux de gaz, qui est disposé dans le flux de l'air d'échappement avant les unités d'accumulateurs de chaleur, dans le flux d'air d'échappement entre l'échangeur de chaleur et le catalyseur, et/ou derrière le catalyseur.

17. Dispositif selon la revendication 15, caractérisé par au moins un ventilateur pour maintenir le flux de gaz, ventilateur qui est disposé avant ou après le brûleur.

18. Dispositif selon l'une des revendications 10 à 17, caractérisé en ce que l'accumulateur de chaleur (3, 5) de l'échangeur de chaleur (1) et le catalyseur (7) sont réunis en une seule unité (51).

19. Dispositif selon la revendication 18, caractérisé en ce que le catalyseur (7) est disposé entre les accumulateurs de chaleur (3, 5).

20. Dispositif selon la revendication 18 ou 19, caractérisé par des cloisons intermédiaires disposées entre les accumulateurs de chaleur et le catalyseur, cloisons intermédiaires qui séparent les flux de gaz l'un de l'autre, celui qui passe à travers l'accumulateur et celui qui passe à travers le catalyseur.

21. Dispositif selon l'une des revendications 10 à 20, caractérisé par un ventilateur (17) servant à amener de l'air frais.
